# FASCICULE DE BREVET EUROPEEN

(11) **EP 3 906 117 B1**
(45) Date de publication et mention de la délivrance du brevet: **08.02.2023**
(21) Numéro de dépôt: 19848977.5
(22) Date de dépôt: 23.12.2019
(51) Int. Cl.: B02C 18/22, B02C 19/18, B02C 23/02

(54) **PROCÉDÉ ET INSTALLATION DE BROYAGE CRYOGÉNIQUE DE PRODUITS**
VERFAHREN UND ANLAGE ZUM KRYOGENEN MAHLEN VON PRODUKTEN
METHOD AND PLANT FOR THE CRYOGENIC GRINDING OF PRODUCTS

(30) Priorité: 03.01.2019 FR 1900024
(43) Date de publication de la demande: 10.11.2021
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: POIRIER, Alban, 75007 PARIS (FR); CLOAREC, Alain, 75007 PARIS (FR); CHARVE, Etienne, 75007 PARIS (FR); POUCHAIN, Olivier, 75007 PARIS (FR)
(74) Mandataire: Air Liquide
(86) Numéro de dépôt international: PCT/FR2019/053274
(87) Numéro de publication internationale: WO 2020/141272

(56) Documents cités:
- CN-A- 107 413 487
- DE-U1- 20 001 065
- FR-A5- 2 142 523
- GB-A- 1 397 793

## Description

La présente invention concerne le domaine des procédés de cryobroyage (broyage en conditions de refroidissement cryogénique) ou de broyage en conditions de température maitrisée, de produits et matériaux, ces procédés sont notamment mis en oeuvre dans le domaine des plastiques, des poudres en chimie, ou bien encore des produits alimentaires.

Le document CN-107413487 illustre l'état de la technique du broyage cryogénique de produits, notamment de produits alimentaires.

On connait dans ce domaine technique notamment des installations fonctionnant dans la configuration suivante : l'installation met en oeuvre une vis de transfert cryogénique alimentée par une rampe de pulvérisation en azote liquide pour (pré)refroidir le produit, le plus souvent pour refroidir jusqu'à la température de fragilisation de la matière, le produit étant ensuite délivré par la vis dans le broyeur.

On ne détaillera pas ici la structure de ces vis (vis avec arbre central plein d'entrainement, de type vis d'Archimède ou vis avec arbre central et pales sur cet arbre), bien connu de l'homme du métier.

On connait également des installations où le broyeur est alimenté en produit par une trémie, munie d'une vanne rotative en sortie de trémie pour transférer le produit au broyeur, que cette trémie soit à base pyramidale ou cylindrique.

Les expérimentations menées à bien par la Demanderesse ont pu démontrer que ces installations antérieures présentaient les inconvénients suivants :
1. les vis cryogéniques évoquées ci-dessus se caractérisent par une surconsommation de cryogène et des difficultés pour réguler le refroidissement puisque ces installations antérieures mettent en oeuvre une seule régulation pour l'ensemble vis + broyeur, avec un thermocouple de régulation situé en sortie de broyeur, mais également par les aspects suivants :
   - de grandes difficultés de nettoyage d'une telle vis.
   - le fait que le cryogène est injecté dans le ciel gazeux de la vis et donc pas directement au sein du produit, ce qui donne lieu à un faible rendement.
   - le temps de séjour du produit est faible.
2. en ce qui concerne l'autre type d'installation, des difficultés liées à la vanne rotative présente en sortie de trémie, dont le débit n'est pas suffisamment stable.

Un des objectifs de la présente invention est alors de proposer une nouvelle solution technique de cryobroyage.

Comme on le verra plus en détails dans ce qui suit, la présente invention propose une installation de cryobroyage mettant en oeuvre les éléments suivants :
1. la mise en oeuvre d'une trémie d'alimentation en produits à broyer, la trémie étant, elle-même, alimentée en produit à broyer, le cryogène (par exemple de l'azote liquide) est apporté à la trémie via des moyens très originaux que nous détaillerons ci-dessous, la trémie est munie en sa partie basse de ce que l'on peut appeler une vis « creuse », i.e un ressort muni de spires (sans arbre central), permettant le déversement du produit hors de la trémie, vis creuse qui comme on l'aura compris remplace la vanne rotative et la vis cryogénique connues selon l'art antérieur. Une telle trémie équipée d'une telle vis creuse peut être également désignée par le terme « doseuse volumétrique ».
2. les produits à broyer sont donc refroidis à une température maitrisée, voire à une température de fragilisation du produit, dans cette trémie, avant d'être déversés dans le broyeur via la vis creuse.
3. l'apport de cryogène dans la trémie est effectué, en tout ou partie, à l'aide d'une canne d'injection (de type clarinette à orifices), positionnée au sein (à l'intérieur) de la vis creuse i.e de ses spires . On peut selon l'invention faire intervenir, en plus de cette canne d'injection, un moyen additionnel d'arrivée de cryogène dans la trémie (par exemple ceux classiquement utilisés tels qu'un tore d'injection) mais cette solution n'est pas préférée selon l'invention.

On n'insistera pas ici sur la structure de telles clarinettes d'injection, bien connues de l'homme du métier des gaz, dont le dimensionnement et notamment le nombre de trous d'injection sera déterminé au cas par cas par un calcul thermique de besoin de frigories pour le débit maximum de produits.

Cette localisation de la canne d'injection se révèle tout particulièrement avantageuse puisqu'ainsi, pouvoir injecter au coeur de la vis creuse de transfert, permet que :
- le produit passant forcément dans cette partie basse de la trémie et au sein de la vis de transfert, on assure ainsi une meilleure homogénéité du refroidissement ;
- vue la localisation de l'injection de cryogène, le cryogène va pouvoir potentiellement se dissiper dans l'ensemble de la masse de produit dans la trémie ;
- le temps de séjour du cryogène est plus long ce qui fournit un meilleur rendement des frigories du cryogène (une vis de transfert classique, avec arbre central, est équipée d'une rampe dans la zone gazeuse, le rendement des frigoriesest alors limité par la sublimation de l'azote dans le ciel gazeux et pas dans le produit). Le temps de séjour est ici plus long car le gaz (froid) est extrait en partie haute de la trémie et passe donc par l'intégralité de la masse de produit dans la trémie.
- par ailleurs, l'utilisation d'une vis creuse permet d'atteindre un débit bien plus stable par rapport à ce qui est observé avec la vanne rotative de l'art antérieur qui, elle, procède par à-coups.

4. Selon un mode avantageux de mise en oeuvre de l'invention, l'injection dans la canne est régulée (et si un tore additionnel est présent l'injection dans ce tore est avantageusement régulée aussi), utilisant une mesure de température (préférentiellement par thermocouple) en sortie de la vis creuse de transfert, dans la zone de sortie du produit de la vis vers le broyeur (dans cette zone, le produit chute, il n'est plus dans la vis creuse), régulation TOR (tout ou rien), ou préférentiellement une régulation PID avec une vanne TOR, ou bien encore une vanne proportionnelle pour la canne d'injection et TOR pour le complément du tore dans la trémie.

Selon une des mises en oeuvre de l'invention, outre cette arrivée de cryogène dans la trémie, on peut mettre en oeuvre une injection de cryogène dans le broyeur proprement dit, ce qui est connu en soi, mais dans une injection qui est alors totalement indépendante de celle de la trémie.

Selon un des modes de mise en oeuvre de l'invention, on peut isoler sous vide tout ou partie de la canne d'injection.

La régulation de la température dans le broyeur (pour vaincre les créations de chaleur du fait du broyage) est ici indépendante de la régulation de la trémie et n'est pas perturbée par l'injection de cryogène, par exemple d'azote liquide, dans la trémie.

Comme on l'a vu, selon un des modes de mise en oeuvre de l'invention, la régulation de l'injection de cryogène dans la canne est effectuée par une mesure de température du produit à broyer (préférentiellement par thermocouple) en sortie de la vis creuse dans la zone de sortie du produit de la vis vers le broyeur, préférentiellement dans la zone de retombée du produit vers le broyeur, donc au plus proche du produit de sortie de la vis de transfert.

L'azote gazeux extrait de la trémie est avantageusement réinjecté dans le broyeur pour récupérer de l'énergie.

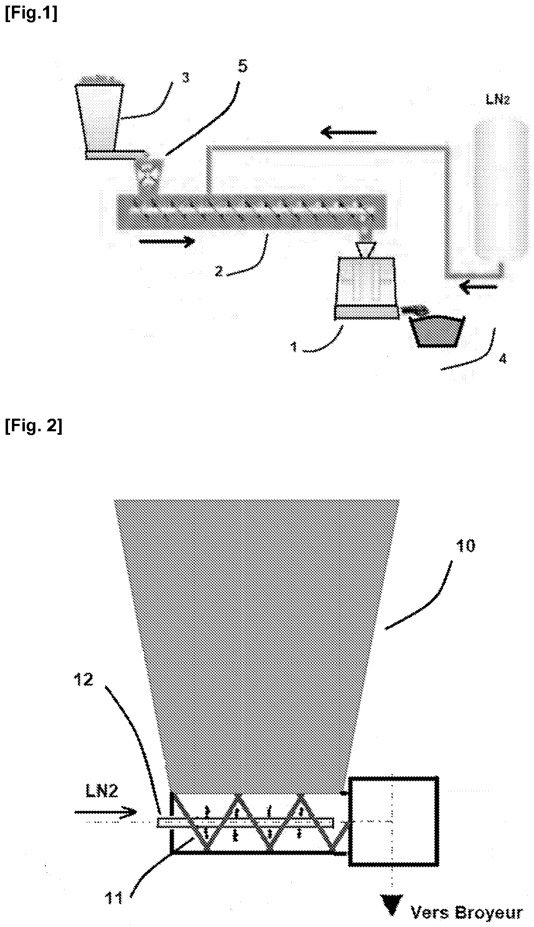

La Figure 1 annexée donne une vue schématique partielle d'une installation conforme à l'art antérieur, sur laquelle on reconnait les éléments suivants :
- le broyeur 1 est alimenté en produit à broyer par une vis de transfert 2 (vis à arbre central) ;
- la vis est elle même alimentée en produit à broyer par une trémie 3, munie d'une vanne rotative (5) qui a été évoquée ci-dessus ;
- le produit est pré-refroidi dans la vis par le fait que la vis est alimentée en azote liquide, par exemple grâce à une rampe de pulvérisation, le produit étant ensuite délivré par la vis dans le broyeur 1 .

La Figure 2 annexée fournit une vue schématique partielle de la partie basse d'une trémie conforme à l'invention, munie d'une vis creuse de transfert et d'une canne d'injection de cryogène située au sein de la vis creuse i.e au sein des anneaux de la vis creuse.

Les résultats des expérimentations menées par la Demanderesse dans ces conditions ont montré les points suivants :
- un fort gain de consommation d'azote par rapport à une technologie classique telle qu'évoquée plus haut mettant en oeuvre une vis de transfert à arbre central (par exemple une vis d'Archimède) : un gain de l'ordre de 20%.
- un fort gain sur la nettoyabilité de l'installation (on conçoit qu'une telle vis creuse est beaucoup plus facile à nettoyer que les vis de l'art antérieur sans qu'il soit nécessaire de développer plus avant).
- on a pu confirmer que la vis creuse permet de réaliser un débit de produit beaucoup plus stable qu'une vanne rotative de l'art antérieur (pas de blocages, pas d'à-coups), et donc une bien meilleure stabilité des conditions de débit/température du produit qui entre dans le broyeur, menant à une granulométrie finale beaucoup plus ciblée.

## Revendications

1. Installation de broyage d'un produit, qui comprend un broyeur dans lequel le produit est broyé, installation qui comprend également les éléments suivants :
• une trémie (10) d'alimentation du broyeur en produit à broyer, la trémie étant elle-même apte à être alimentée en produit à broyer ;
• des moyens d'amenée d'un fluide cryogénique dans la trémie ;
• des moyens permettant de déverser du produit de la trémie dans le broyeur ;
**se caractérisant en ce que** :
• la trémie est munie en sa partie basse d'une vis creuse munie de spires (11) permettant le déversement du produit hors de la trémie, dans le broyeur ;
• lesdits moyens d'amenée d'un fluide cryogénique dans la trémie comprennent une canne d'injection (12), par exemple de type clarinette à orifices, qui est positionnée à l'intérieur des spires de la vis creuse, s'étendant dans une direction sensiblement parallèle à l'axe de la vis.

2. Procédé de broyage d'un produit dans un broyeur, selon lequel :
• le broyeur est alimenté en produit à broyer par une trémie d'alimentation, elle-même alimentée en produit à broyer ;
• le produit à broyer est refroidi à une température maitrisée ou à une température de fragilisation du produit, dans la trémie, avant d'être déversé dans le broyeur, par l'admission d'un cryogène dans la trémie ;
**se caractérisant en ce que** :
• la trémie est munie en sa partie basse d'une vis creuse munie de spires (11) permettant le déversement du produit hors de la trémie dans le broyeur ; et
• le cryogène est apporté à la trémie via une canne d'injection (12) qui est positionnée à l'intérieur des spires de la vis, s'étendant dans une direction sensiblement parallèle à l'axe de la vis.

3. Procédé selon la revendication 2, **se caractérisant en ce que** le gaz résultant de la vaporisation du cryogène, extrait de la trémie, est réinjecté dans le broyeur pour récupérer de l'énergie.

4. Procédé selon la revendication 2 ou 3, **se caractérisant en ce que** l'on régule l'injection de cryogène dans la canne par une mesure de température du produit réalisée en sortie de la vis, dans la zone de chute du produit de la vis vers le broyeur.

## Patentansprüche

1. Einrichtung zum Zerkleinern eines Produkts, die einen Zerkleinerer umfasst, in dem das Produkt zerkleinert wird, wobei die Einrichtung darüber hinaus die folgenden Elemente umfasst:
• einen Trichter (10) zur Versorgung des Zerkleinerers mit einem zu zerkleinernden Produkt, wobei der Trichter selbst mit zu zerkleinerndem Produkt versorgt werden kann;
• Mittel zur Zuführung eines kryogenen Fluids in den Trichter;
• Mittel, die ein Ableiten des Produkts vom Trichter in den Zerkleinerer ermöglichen;
**dadurch gekennzeichnet, dass**:
• der Trichter in seinem unteren Abschnitt mit einer mit Windungen (11) versehenen Hohlschnecke versehen ist, welche die Ableitung des Produkts aus dem Trichter in den Zerkleinerer ermöglicht;
• die Mittel zur Zuführung eines kryogenen Fluids in den Trichter eine Injektionslanze (12), beispielsweise vom Typ eines Verteilers mit Öffnungen, umfassen, die im Inneren der Windungen der Hohlschnecke positioniert ist, wobei sie sich in einer Richtung erstreckt, die im Wesentlichen parallel zur Achse der Schnecke ist.

2. Verfahren zum Zerkleinern eines Produkts in einem Zerkleinerer, wobei:
• der Zerkleinerer durch einen Fülltrichter, der selbst mit zu zerkleinerndem Produkt versorgt wird, mit zu zerkleinerndem Produkt versorgt wird;
• das zu zerkleinernde Produkt im Trichter auf eine gesteuerte Temperatur oder eine Versprödungstemperatur des Produkts gekühlt wird, bevor es in den Zerkleinerer abgeleitet wird, indem dem Trichter ein Kryomittel zugeführt wird;
**dadurch gekennzeichnet, dass**:
• der Trichter in seinem unteren Abschnitt mit einer mit Windungen (11) versehenen Hohlschnecke versehen ist, welche die Ableitung des Produkts aus dem Trichter in den Zerkleinerer ermöglicht; und
• das Kryomittel dem Trichter über eine Injektionslanze (12) zugeführt wird, die im Inneren der Windungen der Schnecke positioniert ist, wobei sie sich in einer Richtung erstreckt, die im Wesentlichen parallel zur Achse der Schnecke ist.

3. Verfahren nach Anspruch 2, **dadurch gekennzeichnet, dass** das aus dem Verdampfen des Kryomittels resultierende Gas, das aus dem Trichter abgezogen wird, erneut in den Zerkleinerer eingespritzt wird, um Energie zurückzugewinnen.

4. Verfahren nach Anspruch 2 oder 3, **dadurch gekennzeichnet, dass** die Einspritzung des Kryomittels in die Lanze durch eine Messung der Temperatur des Produkts geregelt wird, die am Ausgang der Schnecke in der Zone erfolgt, in der das Produkt aus der Schnecke in Richtung des Zerkleinerers fällt.

## Claims

1. Plant for grinding a product, which comprises a grinder in which the product is ground, which plant also includes the following elements:
• a hopper (10) for supplying the grinder with product to be ground, the hopper itself being able to be supplied with product to be ground;
• means for bringing a cryogenic fluid into the hopper;
• means for discharging product from the hopper into the grinder;
**characterized in that**:
• the hopper is provided in its lower part with a hollow screw provided with turns (11) allowing the product to be discharged out of the hopper, into the grinder;
• said means for bringing a cryogenic fluid into the hopper comprise an injection lance (12), for example of the manifold type with orifices, which is positioned inside the turns of the hollow screw, extending in a direction substantially parallel to the axis of the screw.

2. Method for grinding a product in a grinder, according to which:
• the grinder is supplied with product to be ground by a feed hopper, which is itself supplied with product to be ground;
• the product to be ground is cooled to a controlled temperature or to the embrittlement temperature of the product, in the hopper, before being discharged into the grinder, by admission of a cryogen into the hopper;
**characterized in that**:
• the hopper is provided in its lower part with a hollow screw provided with turns (11) allowing the product to be discharged out of the hopper into the grinder; and
• the cryogen is supplied to the hopper via an injection lance (12) that is positioned inside the turns of the screw, extending in a direction substantially parallel to the axis of the screw.

3. Method according to Claim 2, **characterized in that** the gas resulting from the vaporization of the cryogen, which is extracted from the hopper, is reinjected into the grinder so as to recover energy.

4. Method according to Claim 2 or 3, **characterized in that** the injection of cryogen into the lance is regulated by a measurement of the temperature of the product, performed at the outlet of the screw, in the zone in which the product drops from the screw toward the grinder.
